# FASCICULE DE BREVET EUROPEEN

(11) **EP 2 684 822 B1**
(45) Date de publication et mention de la délivrance du brevet: **03.12.2014**
(21) Numéro de dépôt: 13173813.0
(22) Date de dépôt: 26.06.2013
(51) Int. Cl.: B65G 29/00, B65G 47/84

(54) **Dispositif d'augmentation de pas pour transfert positif et individuel d'objets**
Vorrichtung zum Vergrössern eines Schritts für eine positive und individuelle Übertragung von Objekten
Device to increase the step for positive and individual transfer of objects

(30) Priorité: 13.07.2012 FR 1256823
(43) Date de publication de la demande: 15.01.2014
(73) Titulaire: SIDEL PARTICIPATIONS, 76930 Octeville-sur-Mer (FR)
(72) Inventeur: Brachet, Vincent, 76930 Octeville-sur-Mer (FR); Nguyen Van, Daniel, 76930 Octeville-sur-Mer (FR)
(74) Mandataire: Cabinet Plasseraud

(56) Documents cités:
- WO-A1-01/42113
- WO-A1-2011/113710
- US-A- 4 790 741

## Description

### DOMAINE DE L'INVENTION

L'invention concerne le domaine des équipements de convoyage positif et individuel d'objets le long d'une trajectoire de convoyage. Un convoyage est positif et individuel lorsque chacun des objets est tenu ou guidé lors du convoyage. Les objets convoyés sont répartis le long de la trajectoire de convoyage selon un pas périphérique.

L'invention concerne notamment le domaine des mécanismes de transfert des objets entre deux équipements de convoyage positif et individuel d'objets.

L'invention concerne en particulier des dispositifs d'augmentation de pas selon le préambule de la revendication 1, qui permettent au mécanisme de transfert de transférer positivement et individuellement des objets depuis un équipement de convoyage amont selon un premier pas périphérique vers un équipement de convoyage aval selon un deuxième pas périphérique strictement supérieur au premier pas périphérique.

Un tel dispositif d'augmentation de pas est décrit dans le document WO-A-2011/113710.

L'invention concerne par exemple le transfert d'objets de type préformes destinées à être transformées en un récipient par soufflage ou étirage-soufflage.

### ETAT DE LA TECHNIQUE

Un mécanisme bien connu de transfert est constitué par une paire de roues à encoches. Les deux roues sont mobiles en rotation autour d'axes parallèles contenus dans un plan médian et sont synchronisées entre elles. Le mécanisme comprend un premier guide entourant la première roue d'un côté du plan médian et comprend un deuxième guide entourant la deuxième roue du côté opposé du plan médian. Les diamètres des roues peuvent être différents mais la distance périphérique entre deux encoches successives sont identiques pour les deux roues. Ce mécanisme de transfert n'est pas un dispositif d'augmentation de pas.

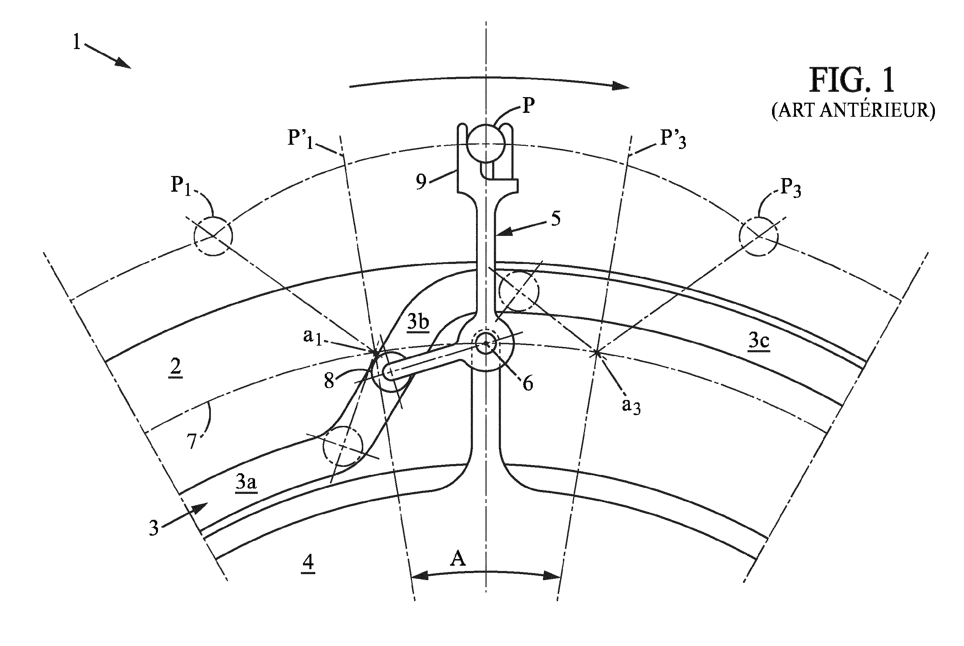

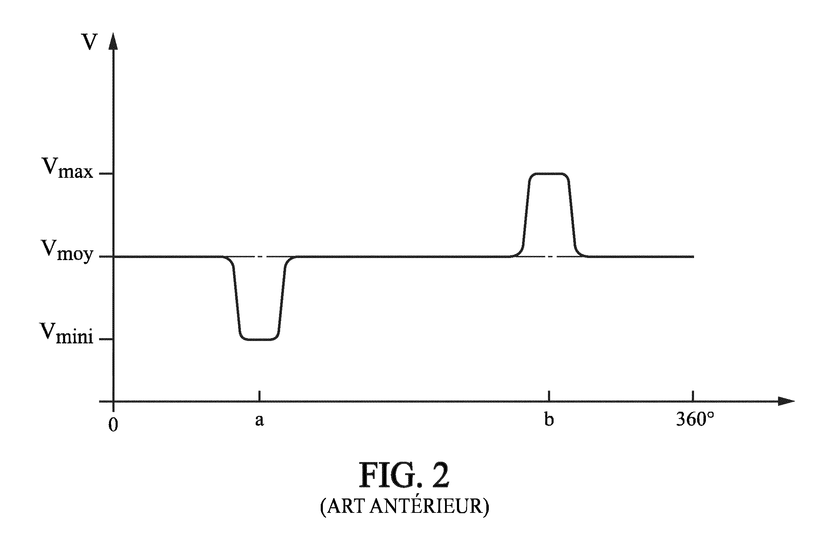

On connaît également le dispositif **1** illustré aux figures 1 et 2 qui permet de changer de pas de transfert. Un bâti **2** est équipé d'un chemin **3** de came. Une roue **4** comprend une série de bras **5** de préhension dont un seul est représenté. Chaque bras 5 de préhension est monté mobile en rotation autour d'un axe **6** auxiliaire qui est parallèle à l'axe de rotation de la roue 4. Chaque bras 5 de préhension comprend une pince **9** pour préforme **P** et un galet **8** d'actionnement à distance de l'axe 6 auxiliaire. Chaque axe 6 auxiliaire se déplace au-dessus du bâti 2 le long d'un cercle **7.** Lors de la rotation de la roue 4, le galet 8 d'actionnement coulisse dans le chemin 3 de came. Cela a comme effet de faire pivoter le bras 5 de préhension autour de l'axe 6.

Le chemin 3 de came présente une zone **3a** amont et une zone **3c** aval qui sont toutes les deux circulaires et qui sont raccordées par une rampe **3b** inclinée par rapport au cercle 7. "a1" est la position de l'axe 6 lorsque le galet 8 est à l'extrémité amont de la rampe 3b et la préforme occupe un emplacement "p1" illustré en traits mixtes sur la figure. "a3" est la position de l'axe 6 lorsque le galet 8 est à l'extrémité aval de la rampe 3b et la préforme occupe une place "p3". "A" est le secteur angulaire parcouru par l'axe 6 entre les positions "a1" et "a3". Lorsque la roue 4 parcourt le secteur angulaire "A", la préforme passe de "p1" à "p3". Si le bras 5 de préhension était monté fixe sur la roue 4, la préforme aurait parcouru le chemin de "p1'" à "p3'" qui est plus court que le chemin de "p1" à "p3". Le dispositif 1 permet donc bien d'augmenter localement le pas parcouru par la préforme à l'endroit de la rampe 3b.

Comme illustré en figure 2, le dispositif 1 présente une position "a" angulaire dans laquelle la vitesse "V" de défilement périphérique de la préforme est ralentie (Vₘᵢₙᵢ) par rapport à la vitesse moyenne (V_{moy}). La position "a" peut coïncider avec la saisie de la préforme dans un équipement de convoyage de faible pas, tel qu'un four de chauffage de préformes qui peut présenter un pas de défilement de 50 mm entre les préformes. Dans une position "b" angulaire, la vitesse "V" de défilement périphérique de la préforme est accélérée (Vₘₐₓ) par rapport à la vitesse moyenne. La position "b" peut coïncider avec la remise de la préforme à un équipement de convoyage de pas élevé, telle qu'une machine de soufflage pouvant présenter un pas de 500 mm entre les stations de soufflage.

Cependant, le dispositif 1 est limité dans le coefficient de changement de vitesse de défilement susceptible d'être obtenu. En effet, plus le débattement angulaire du bras 5 de préhension est important, plus la distance de la pince 9 à l'axe de rotation de la roue 4 varie. Pour explorer des coefficients de changement de vitesse plus élevés, on a développé des bras à deux degrés de liberté commandés par came. En plus du chemin 3 de came commandant la position angulaire relative du bras 5, est ajouté un autre chemin de came commandant une translation radiale de la pince 9 sur le bras 5. Il existe un besoin d'obtenir un changement de vitesse de défilement des objets avec un mécanisme plus simple.

Par ailleurs, le dispositif 1 est limité en cadence, c'est-à-dire en nombre d'objets transférés par heure. Cette limite est d'autant plus rapidement atteinte que le coefficient de changement de vitesse de défilement est élevé. En effet, l'augmentation du coefficient entraîne une pente 3b plus inclinée afin de plus accélérer ou décélérer localement la pince 9. Cela se traduit par des contraintes mécaniques d'autant plus élevées que la roue 4 tourne rapidement. Un besoin existe d'obtenir un coefficient de changement de vitesse de défilement moins limité en cadence.

### OBJET ET RESUME DE L'INVENTION

L'invention propose un dispositif d'augmentation de pas pour transfert positif selon la revendication 1 un mécanisme de transfert selon la revendication 5 et une installation de soufflage de préformes selon la revendication 7 qui répondent à au moins l'un des besoins précités.

Un but de l'invention est de simplifier le dispositif d'augmentation de pas et/ou de le rendre moins limité en débit d'objets transférés.

Selon un mode de réalisation, le dispositif d'augmentation de pas pour transfert positif et individuel d'objets, comprend :
- une première et une deuxième roues à encoches, mobiles respectivement autour d'un premier et d'un deuxième axe de rotation, lesquels axes sont sensiblement contenus dans un plan médian ; les encoches de chaque roue étant réparties respectivement selon un premier pas périphérique et un deuxième pas périphérique,
- un mécanisme de liaison desdites rotations synchronisant périodiquement les encoches des deux roues,
- un moyen d'entraînement en rotation des roues, définissant un coté amont et un coté aval du plan médian,
- un premier et un deuxième guides entourant respectivement la première et la deuxième roue et s'étendant à partir du plan médian en direction respectivement du coté amont et du coté aval, et disposés pour maintenir l'objet dans l'encoche correspondante. Le deuxième pas périphérique est strictement supérieur au premier pas périphérique. Chacune des encoches est délimitée par un flanc amont coopérant avec le guide correspondant pour circonscrire un cercle de référence et par un flanc aval. Pour chaque roue, le flanc aval des encoches est conçu pour ne pas interférer lors de la rotation des roues avec le cercle de référence de l'encoche correspondante de la roue opposée.

Un tel dispositif est principalement adapté à transférer des objets dont une section est circulaire et correspond au cercle de référence. Toutefois, l'objet transféré peut présenter une section de guidage coopérant avec les encoches qui n'est pas purement circulaire. La section de guidage de l'objet transféré est alors avantageusement inscrite dans le cercle de référence. Ainsi, ledit objet glisse le long du premier guide en étant poussé par le flanc amont de l'encoche de la première roue. Le flanc aval de l'encoche de la deuxième roue qui va recevoir cet objet n'interfère pas avec cet objet bien que cette encoche de la deuxième roue présente une vitesse périphérique plus rapide que l'objet. Une fois passé le plan médian, le même objet est poussé par le flanc amont de l'encoche de la deuxième roue et l'objet glisse le long du deuxième guide. Le flanc aval de l'encoche de la première roue que cet objet vient de quitter n'interfère pas avec l'objet qui s'éloigne. Autrement dit, l'objet a pu passer de la première roue avec une vitesse de défilement périphérique faible à la deuxième roue avec une vitesse de défilement périphérique plus élevée et ceci de manière simple. De plus, il n'y a pas de pièce en mouvement rapide. Le dispositif d'augmentation de pas est alors moins limité en débit d'objets à transférer que le dispositif 1 décrit précédemment.

Avantageusement, le flanc aval de chacune des encoches d'au moins une des roues est défini par l'enveloppe de l'ensemble des cercles de référence de l'encoche correspondante à ladite encoche dans la roue opposée, lors de la rotation des roues. Autrement dit, le flanc aval des encoches de la deuxième roue est conjugué à l'entrée d'un cercle de référence dans ladite encoche. Ainsi, cette encoche de la deuxième roue commence à tenir l'objet avant que celui-ci arrive au plan médian, cela permet de bien plaquer l'objet sur le flanc amont de l'encoche de la première roue. De même, le flanc aval de chacune des encoches de la première roue est conjugué à la sortie d'un cercle de référence de la deuxième roue hors de cette encoche. Cela permet à cette encoche de continuer à tenir l'objet au-delà du plan médian. Cela permet de bien plaquer l'objet sur le flanc amont de l'encoche de la deuxième roue.

Avantageusement, les centres des cercles de référence de chacune des encoches d'une roue sont répartis le long d'un cercle coaxial à l'axe de rotation de la roue correspondante.

Avantageusement, le mécanisme de liaison est conçu pour solidariser la rotation de la première roue à encoches et la rotation de la deuxième roue à encoches de manière que périodiquement le centre du cercle de référence d'une encoche de la première roue arrive au plan médian simultanément à l'arrivée du centre du cercle de référence d'une encoche de la deuxième roue.

L'invention porte également sur un mécanisme de transfert constitué d'un premier dispositif d'augmentation de pas précité, suivi d'un deuxième dispositif d'augmentation de pas précité. La deuxième roue du premier dispositif est la première roue du deuxième dispositif. Le cumul successif de deux paires de roues à encoches permet de multiplier les taux d'augmentation du pas. Cela permet également que la deuxième roue du deuxième dispositif tourne dans le même sens de rotation que la première roue du premier dispositif. Cela simplifie l'implantation du mécanisme de transfert.

Chacun des dispositifs d'augmentation de pas présente un taux d'augmentation égale au deuxième pas périphérique divisé par le premier pas périphérique. Avantageusement, le flanc aval de chacune des encoches de la roue commune au premier et au deuxième dispositifs est défini par l'enveloppe de l'ensemble des cercles de référence de l'encoche correspondante à ladite encoche dans la roue opposée appartenant au dispositif de plus grand taux d'augmentation, lors de la rotation des roues. Cela permet aux encoches de la roue commune d'être optimisées pour la paire de roues de plus grand taux d'augmentation de pas. Avantageusement, le diamètre et le nombre d'encoches des roues du deuxième dispositif d'augmentation de pas sont adaptés pour que les deux taux d'augmentation soient voisins. Ainsi, les encoches de la roue commune aux deux dispositifs d'augmentation de pas sont sensiblement optimisées à la fois pour leur coopération avec les encoches de la première roue du premier dispositif et avec les encoches de la deuxième roue du deuxième dispositif.

L'invention porte en outre sur une installation de soufflage de préformes, comprenant :
- un four de chauffage des préformes comprenant un mécanisme de convoyage des préformes, présentant un pas périphérique primaire de défilement des préformes,
- une machine de soufflage comprenant une pluralité de station de soufflage des préformes, présentant un pas périphérique final de défilement des stations de soufflage,
- un mécanisme de transfert principal, conçu pour recevoir des préformes selon un pas périphérique intermédiaire strictement inférieur au pas périphérique final et strictement supérieur au pas périphérique primaire, et à mettre les préformes à disposition de la machine de soufflage,
- un mécanisme de transfert auxiliaire, conçu pour recevoir des préformes du four de chauffage selon le pas périphérique primaire et à mettre à disposition du mécanisme de transfert principal, les préformes selon le pas périphérique intermédiaire.

Le mécanisme de transfert auxiliaire comprend un dispositif d'augmentation de pas précité ou comprend un mécanisme de transfert précité.

Le fait que le transfert entre le four de chauffage de préformes et la machine de soufflage soit réparti sur deux mécanismes de transfert différents montés en série l'un après l'autre, fait que chacun des mécanismes de transfert doit prendre en charge un taux d'augmentation du pas plus faible. Si l'un des mécanismes est un dispositif 1 décrit aux figures 1 et 2, alors les rampes 3b peuvent être moins inclinées et la cadence de transfert peut être significativement augmentée pour une même limite de contrainte mécanique des matériaux.

### BREVE DESCRIPTION DES DESSINS

- les figures 1 et 2 illustrent respectivement une vue de dessus et un graphe de vitesses d'un dispositif d'adaptation de pas périphérique de l'art antérieur.

La présente invention sera mieux comprise à l'étude de la description détaillée de quelques modes de réalisation pris à titre d'exemples nullement limitatifs et illustrés par les dessins annexés sur lesquels :
- les figures 3 à 6 illustrent une vue de dessus selon la flèche III de la figure 7, d'un mode de réalisation de dispositif d'augmentation de pas,
- la figure 7 est une coupe partielle selon la ligne VII-VII de la figure 3, illustrant un guide,
- la figure 8 est une vue de dessus d'une installation de soufflage de préformes, utilisant un mécanisme de transfert comprenant un premier dispositif d'augmentation de pas et un deuxième dispositif d'augmentation de pas selon les figures 3 à 7,
- la figure 9 illustre la roue commune au premier et au deuxième dispositif d'augmentation de pas de la figure 8,
- la figure 10 est une vue en coupe selon le plan médian d'un deuxième mode de réalisation de dispositif d'augmentation de pas.

### DESCRIPTION DETAILLEE

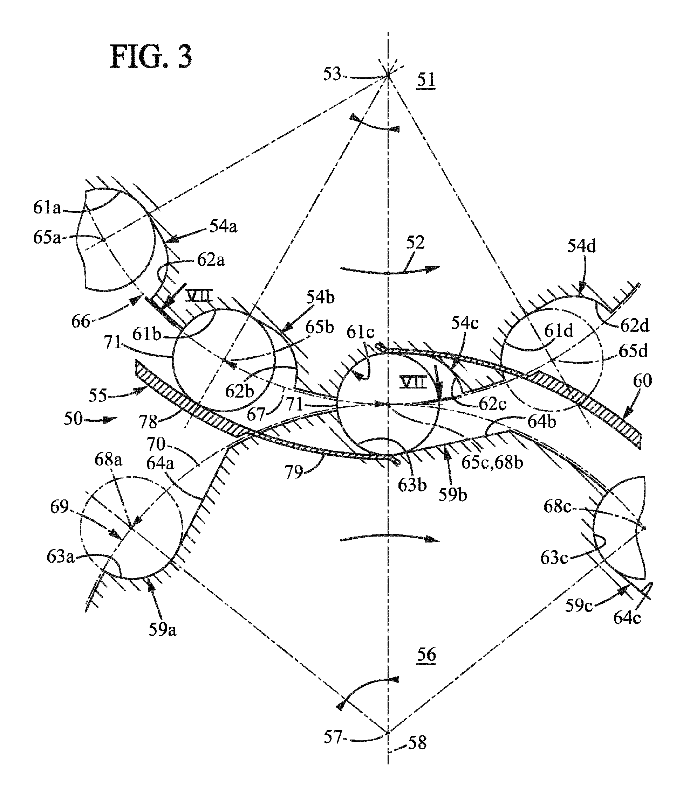

Comme illustré sur la figure 3, un dispositif **50** comprend une première roue **51** entraînée en rotation par un moyen d'entraînement non illustré dans un sens **52** indiqué par la flèche. La première roue 51 est mobile autour d'un premier axe **53** de rotation et comprend une succession de premières encoches **54a, 54b, 54c, 54d** et est entourée par un premier guide **55** circulaire et coaxial au premier axe 53.

De même, le dispositif 50 comprend une deuxième roue **56** mobile en rotation autour d'un deuxième axe **57** de rotation. Le dispositif 50 comprend un mécanisme de liaison des rotations des première et deuxième roues 51, 56 de manière que la roue 56 soit entraînée dans un sens opposé au sens de rotation de la première roue 51. Les premier et deuxième axes 53, 57 de rotation sont sensiblement parallèles et contenus dans un plan **58** médian. La deuxième roue 56 présente également une succession de deuxièmes encoches **59a, 59b, 59c** et est entourée par un deuxième guide **60** circulaire et coaxial au deuxième axe 57.

Chacune des premières encoches 54a, 54b, 54c, 54d présentent une forme concave ouverte radialement vers l'extérieur de la première roue 51 et est constituée, de part et d'autre du point de la forme concave la plus proche du premier axe 53, d'un premier flanc amont **61a, 61b, 61c, 61d** et d'un premier flanc aval **62a, 62b, 62c, 62d.** De même, chacune des deuxièmes encoches 59a, 59b, 59c présente une forme concave ouverte radialement vers l'extérieur de la deuxième roue 56 et est constituée, de part et d'autre du point de la forme concave la plus proche du deuxième axe 57 par un deuxième flanc amont **63a, 63b, 63c** et par un deuxième flanc aval **64a, 64b, 64c.** Pour chacune des premières et deuxièmes encoches, le flanc aval est celui qui traverse le plan 58 médian entre les axes 53, 57 le premier et le flanc amont est celui qui le traverse en dernier.

Le sens de rotation des premières et deuxièmes roues 51, 56 permet également de définir un côté amont du plan 58 médian qui est celui par où les encoches des deux roues 51, 56 s'approchent du plan 58 médian entre les axes 53, 57. L'autre côté du plan 58 médian est un côté aval. Le premier guide 55 s'étend à partir du plan 58 médian et entoure la première roue 51 du côté amont du plan 58 médian. De même, le deuxième guide 60 s'étend à partir du plan 58 médian et entoure la deuxième roue 56 du côté aval du plan 58 médian.

Pour chacune des premières encoches 54a, 54b, 54c, 54d, on définit un cercle de référence qui est circonscrit entre le premier flanc amont 61a, 61b, 61c, 61d correspondant et le premier guide 55. De même, pour chacune des deuxièmes encoches 59a, 59b, 59c, on définit un cercle de référence qui est circonscrit entre le deuxième flanc amont 63a, 63b, 63c correspondant et le deuxième guide 60.

Les cercles de référence des premières encoches présentent des centres **65a, 65b, 65c, 65d** répartis de manière équidistante le long d'une trajectoire **66** selon un premier pas **67** périphérique. De même, les cercles de référence des deuxièmes encoches présentent des centres **68a, 68b, 68c** répartis de manière équidistante le long d'une trajectoire **69** selon un deuxième pas **70** périphérique.

De manière avantageuse, les cercles de référence des premières encoches sont tous de même diamètre. De même, les cercles de référence des deuxièmes encoches sont avantageusement de même diamètre et sont également avantageusement identiques au diamètre des cercles de référence des premières encoches. Les trajectoires 66, 69 sont circulaires et coaxiales à l'axe 53, 57 de rotation correspondant. Toutefois, de légères différences de diamètre sont possibles sans empêcher le fonctionnement du dispositif 50.

De manière avantageuse mais non obligatoire, les premier et deuxième flancs amont sont circulaires. Ils peuvent toutefois être constitués par deux zones de butée circonscrites au cercle de référence de l'encoche correspondante.

De manière avantageuse, les trajectoires 66, 69 sont tangentes l'une à l'autre à l'endroit d'intersection avec le plan 58 médian. Toutefois, les trajectoires 66, 69 pourraient ne pas présenter de point commun ou être sécantes à condition que leur point d'intersection avec le plan 58 médian reste voisin en regard des diamètres des cercles de référence.

Le moyen d'entraînement en rotation ainsi que le mécanisme de liaison des rotations (non représenté) sont conçus de manière que périodiquement, un centre du cercle de référence des premières encoches (le centre 65c en figure 3) arrive au plan médian au même moment qu'un centre de cercle de référence des deuxièmes encoches (le centre 68b en figure 3). On appellera cet instant un instant de coïncidence.

Durant la période de temps s'écoulant entre deux instants de coïncidence, la première roue 51 est entraînée à une vitesse telle que le centre 65b du cercle de référence immédiatement en amont du plan 58 médian parcourt le premier pas 67 périphérique, pendant que la deuxième roue 56 est entraînée à une vitesse telle que le centre 68a du cercle de référence immédiatement en amont du plan 58 médian parcourt le deuxième pas 70 périphérique.

On comprend qu'un objet, telle qu'une préforme, présentant une section **71** circulaire sensiblement égale au diamètre commun à l'ensemble des cercles de référence peut être reçu entre la première encoche 54b et le premier guide 55, être poussé par le premier flanc amont 61b, glisser le long du premier guide 55 jusqu'au plan 58 médian. Cet objet peut alors être pris en charge par la deuxième encoche 59a correspondante, être alors poussé par le deuxième flanc amont 63a et glisser le long du deuxième guide 60. Ainsi, le long du premier guide 55, les objets successifs sont séparés les uns des autres d'une distance égale au premier pas 67 périphérique puis transitent le long du deuxième guide 60 où ils sont alors espacés d'une distance égale au deuxième pas 70 périphérique. Il y a eu augmentation du pas séparant la succession des objets transférés sans pièce mobile.

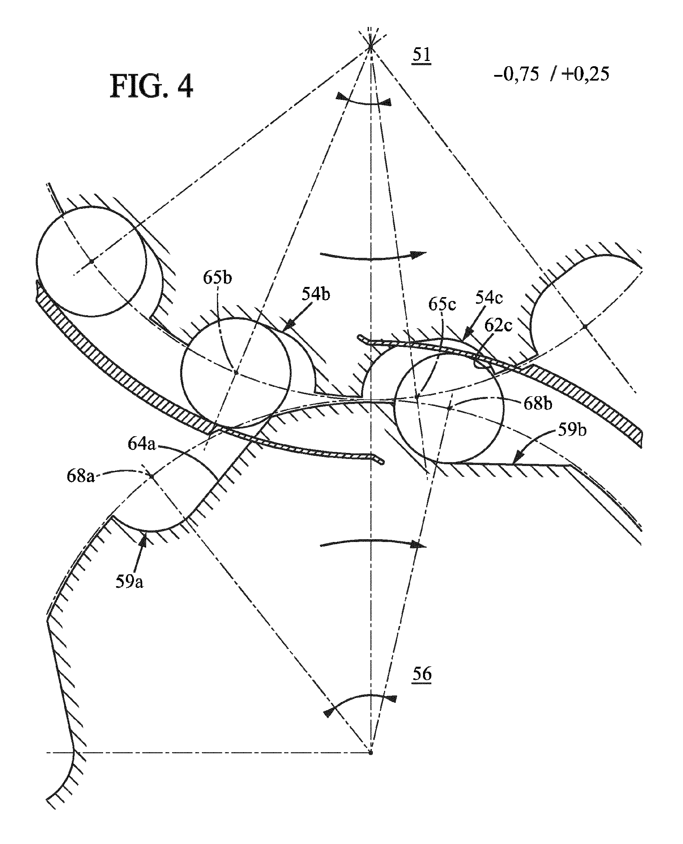

On va à l'aide des figures 4 à 6 décrire un mode de réalisation particulièrement avantageux des premier et deuxième flancs avals qui sont conjugués au déplacement du cercle de référence de l'encoche correspondante.

La figure 4 illustre la position des objets dans les encoches après une durée suivant l'instant de coïncidence de la figure 3 égale à un quart de la période séparant deux instants de coïncidence. C'est-à-dire que le centre 65c du cercle de référence de la première encoche 54c a parcouru un quart du premier pas 67 périphérique et le centre 68b du cercle de référence de la deuxième encoche 59b a parcouru un quart du deuxième pas 70 périphérique. Autrement dit, le premier flanc 62c aval est suffisamment éloigné du centre 65c pour que l'objet entraîné par la deuxième encoche 59b n'interfère pas avec la première roue 51.

Dans ce même instant, le centre 65b du cercle de référence de l'encoche 54b est en amont du plan 58 médian d'une distance égale aux trois quarts du premier pas 67 périphérique. Le deuxième flanc aval 64a est suffisamment éloigné du centre 68a pour que l'objet entraîné par la première encoche 54b n'interfère pas avec la deuxième roue 56.

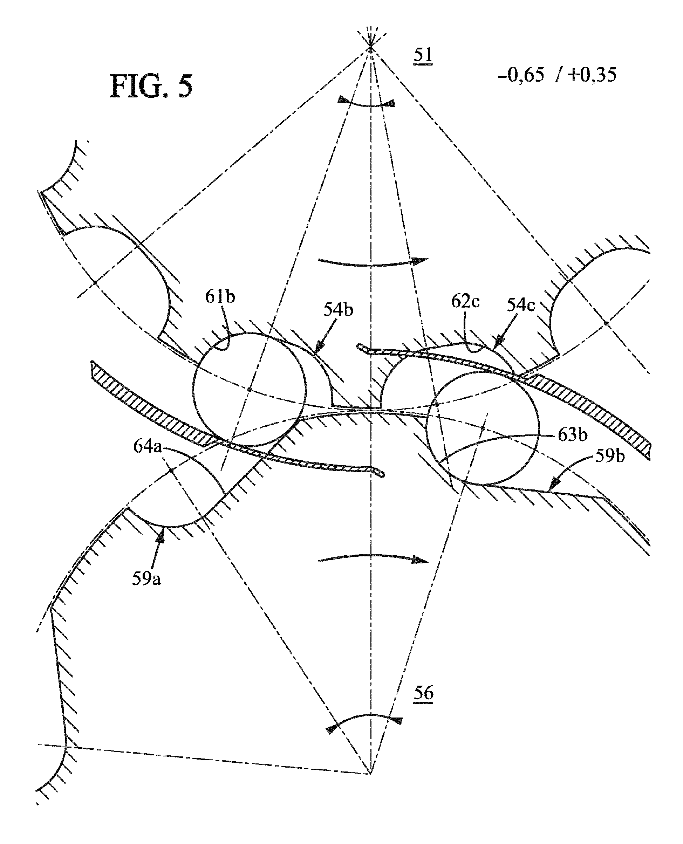

De préférence, comme illustré en figure 5, le cercle de référence de la deuxième encoche 59b longe le premier flanc 62c aval. Cela permet à l'encoche 54c de continuer à plaquer l'objet pris en charge par la deuxième encoche 59b contre le deuxième flanc 63b amont.

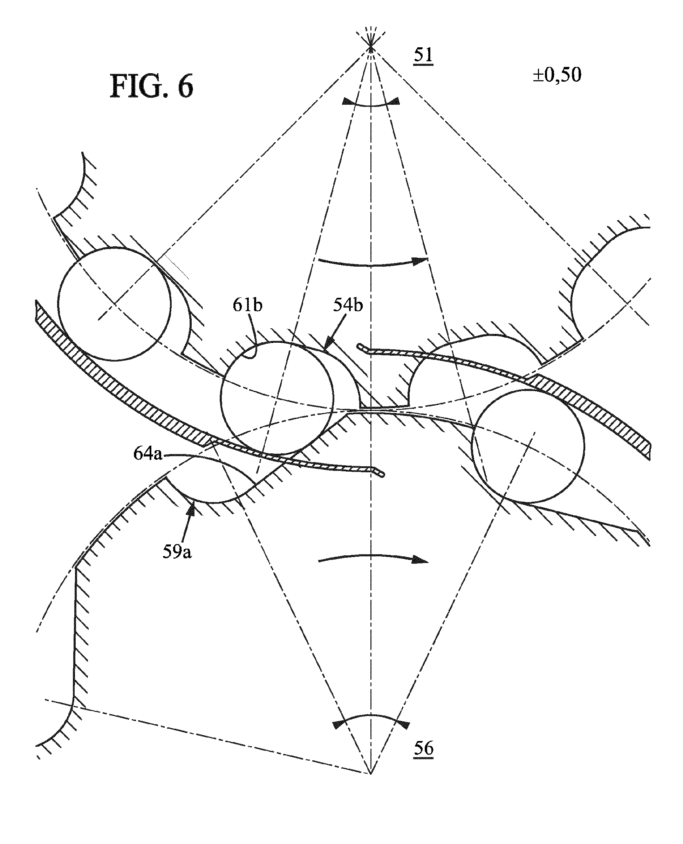

De même, comme visible aux figures 5 et 6, le cercle de référence de la première encoche 54b longe le deuxième flanc 64b aval. Cela permet à la deuxième encoche 59a de retenir l'objet de la première encoche 54b et de le maintenir plaqué contre le premier flanc 61b amont.

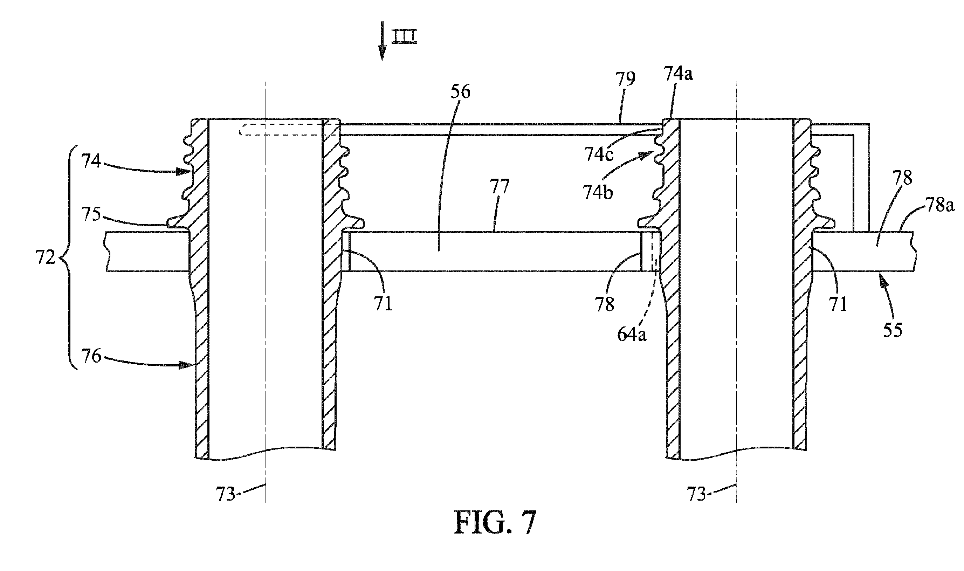

Dans une utilisation avantageuse du dispositif 50, illustrée en figure 7, l'objet transféré est une préforme **72** présentant un axe **73** et comprenant un goulot **74,** une collerette **75** et une partie **76** principale destinée à être étirée et soufflée. La section **71** de guidage de la préforme 72 est située en-dessous de la collerette 75 du côté de la partie 76 principale.

La section 71 de guidage est cylindrique et coaxiale à l'axe 73 et la collerette 75 s'étend radialement au-delà de la section 71 de guidage. De plus, les première et deuxième roues 51, 56 sont usinées dans des plaques d'épaisseurs voisines et présentant chacune une surface **77** supérieure. Les roues sont disposées de manière que leurs surfaces 77 supérieures soient situées à la même hauteur. Ainsi, quand la préforme 72 est dans le plan 58 médian, la section 71 de guidage est enserrée par la première encoche 54c et par la deuxième encoche 59b en regard (figure 3). La collerette 75 s'appuie alors sensiblement par une moitié sur la surface 77 supérieure de la première roue 51 et sensiblement par une autre moitié sur la surface 77 supérieure de la deuxième roue 56. Cela permet à l'axe 73 de la préforme 72 de rester sensiblement vertical et parallèle aux premier et deuxième axes 53, 57 de rotation.

Le premier guide 55 comprend une partie **78** principale et un prolongateur **79.** La partie 78 principale présente une surface **78a** située à la même hauteur que les surfaces 77 supérieures des deux roues 51, 56. Dans une phase d'approche, lorsque la préforme 72 est guidée par la section 71 de guidage entre une première encoche et le premier guide 55, la collerette 75 est en appui d'une part sur la surface 77 supérieure de la première roue 51 et d'autre part sur la surface 78a supérieure de la partie principale 78. Les deux parties de la collerette 75 en appui sont diamétralement opposées par rapport à l'axe 73 de la collerette, ce qui confère une bonne stabilité mécanique à la préforme 72.

Comme on le voit en figure 3, la partie 78 principale entoure la première roue 51 jusqu'au cercle 69 de la deuxième roue 56. Le prolongateur 79 prend le relais de la partie 78 principale pour continuer à maintenir la préforme 72 dans la première encoche jusqu'à ce que la préforme 72 arrive au plan 58 médian. Le goulot 74 présente une ouverture **74a,** également appelée buvant 74a, un filetage **74b** s'étendant entre l'ouverture 74a et la collerette 75. Le goulot présente un bord **74c** dont une surface radialement extérieure est cylindrique et lisse et s'étend axialement sur quelques millimètres de haut à partir du buvant 74a jusqu'au filetage 74b.

Le prolongateur 79 est un fil qui s'étend au-dessus des surfaces 78a, 77 supérieures, à la hauteur du bord 74c lisse. Le prolongateur 79 peut ainsi guider la préforme 72 pendant que celle-ci entre dans la deuxième encoche 59a. Le prolongateur 79 permet de maintenir l'axe 73 de la préforme 72 en position verticale pendant que la collerette 75 quitte la partie principale 78 du premier guide 55 pour glisser au-dessus de la deuxième roue 56. Le prolongateur 79 maintient la section 71 de guidage plaquée contre le premier flanc 61b, 61c amont et évite qu'elle ne quitte l'emplacement déterminé par le cercle de référence de la première encoche 54b, 54c. Ainsi, la section 71 de guidage peut entrer dans la deuxième encoche 59a, 59b sans heurter la deuxième roue 56.

Ce qui a été décrit pour le premier guide 55 est également présent de manière analogue dans le deuxième guide 60.

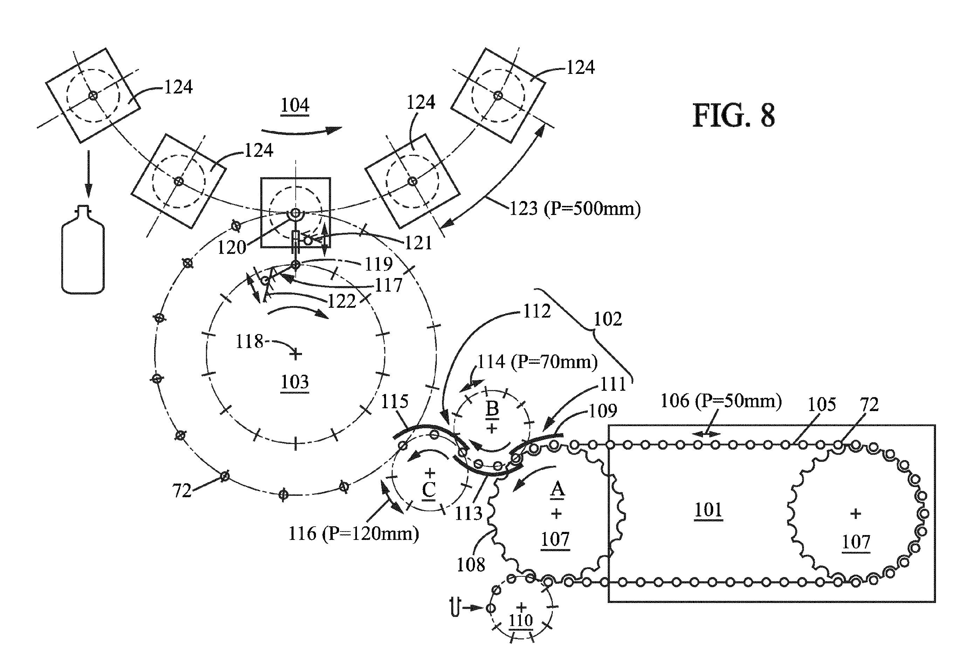

Comme illustré en figure 8, une installation **100** de soufflage de préformes 72 comprend successivement en suivant le parcours des préformes 72 : un four **101** de préchauffage, un mécanisme **102** de transfert auxiliaire, un mécanisme **103** de transfert principal et une machine **104** de soufflage.

Le four 101 de préchauffage comprend une chaîne **105,** équipée d'une succession de mécanismes de préhension des préformes 72 par leur goulot 74. Ce mécanisme est souvent appelé "tournette". Le long de la chaîne 105, les préformes 72 sont espacées les unes des autres d'une distance **106** que nous appellerons "pas 106 périphérique primaire". Pour réduire la dimension du four, on cherche souvent à augmenter la densité des préformes 72 dans le four. Le pas 106 périphérique primaire peut être de 50 mm par exemple.

La chaîne 105 est entraînée par deux roues **107** dont une, la roue A, est située au moins en partie à l'extérieur du four 101. Lorsque la chaîne 105 quitte le four 101 et commence à entourer la roue A, les tournettes se retirent des préformes 72 et ces dernières sont prises en charge entre des encoches **108** de la roue **A** et un guide **109** entourant la roue A. La roue A coopère également avec une roue **110** d'alimentation en préformes 72.

Le mécanisme 102 de transfert auxiliaire est composé d'un premier et d'un deuxième dispositifs d'augmentation de pas, respectivement **111** et **112,** tels que décrits précédemment. Le premier dispositif 111 d'augmentation de pas est constitué par la roue A, en tant que première roue, accompagnée de son guide 109, et par une roue **B,** en tant que deuxième roue, accompagnée d'un guide **113.** Les préformes 72 sont entraînées par la roue B selon un pas **114** périphérique qui peut être de 70 mm par exemple. Dans cet exemple non limitatif, le premier dispositif 111 d'augmentation de pas présente un taux d'augmentation de 1,4.

Le deuxième dispositif 112 d'augmentation de pas est constitué par la roue B, en tant que première roue accompagnée de son guide 113, et par une roue **C** en tant que deuxième roue accompagnée par un guide **115.** Autrement dit, la roue B est commune au premier et au deuxième dispositifs 111, 112 d'augmentation de pas. Les préformes 112 sont entraînées par la roue C selon un pas **116** périphérique qui peut être de 120 mm par exemple et que nous appellerons "pas 116 périphérique intermédiaire". Dans cet exemple, le deuxième dispositif 112 d'augmentation de pas présente un taux d'augmentation de 1, 71 .

Le mécanisme 103 de transfert principal comprend une série de bras **117** embarqués sur une roue (non représentée) d'axe **118.** Chacun des bras 117 est mobile en rotation autour d'un axe **119** auxiliaire. Les différents axes 119 sont répartis le long d'un cercle coaxial à l'axe 118. Un seul bras 117 a été représenté. Chaque bras 117 comprend une pince **120** dont la position relative radiale est commandée par un chemin **121** de came et dont la position relative angulaire est commandée par un chemin **122** de came.

Comme expliqué à l'aide de la figure 1, le mécanisme 103 de transfert principal présente une vitesse moyenne d'entraînement des préformes qui est ralentie pour coïncider au regard de la roue C au pas 116 périphérique intermédiaire et qui est accélérée au regard de la machine 104 de soufflage pour coïncider avec un pas **123** périphérique final. Le pas 123 périphérique final correspond à la distance entre deux stations **124** d'étirage-soufflage successives. Cette distance peut être de 500 mm par exemple de sorte que le mécanisme 103 de transfert principal présente alors un taux d'augmentation de pas de 4,16.

On comprend que le fait d'avoir séparé le transfert entre le four 101, avec un pas périphérique primaire de 50 mm et la machine de soufflage avec un pas périphérique final de 500 mm, entre deux mécanismes successifs de transfert 102, 103, a permis de réduire fortement le taux d'augmentation de pas devant être réalisée par le mécanisme 103 de transfert principal. Cela permet de moins incliner les rampes des chemins de came 121, 122 et d'augmenter la cadence générale de l'installation 100.

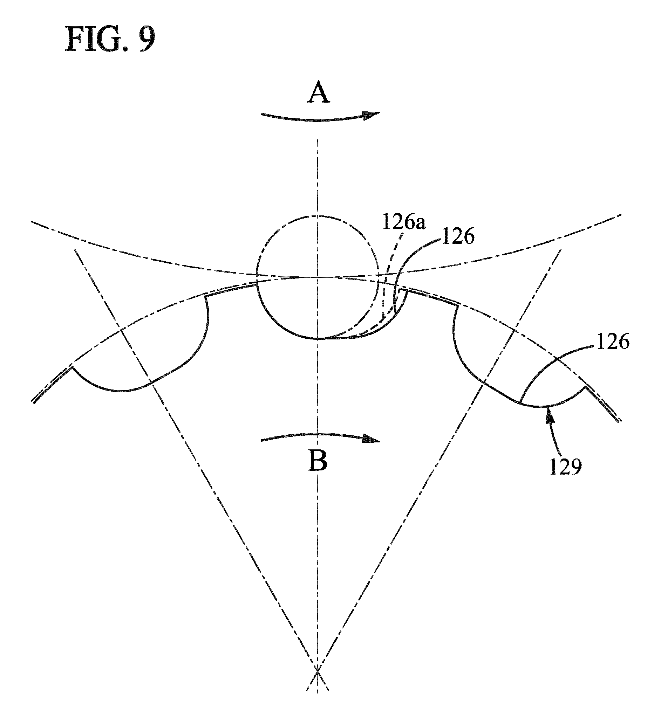

Dans la figure 9, la roue B est illustrée dans sa partie qui coopère avec la roue A. La roue B présente des encoches **129** comprenant un flanc **126** aval qui est conjugué avec le déplacement des cercles de référence entraînés par la roue C avec laquelle la roue B présente le taux d'augmentation de pas le plus élevé. En effet, on a représenté en pointillé un profil **126a** conjugué avec les cercles de référence entraînés par la roue A est indiqué en pointillés. Pour être compatible à la fois avec le premier dispositif 111 d'augmentation de pas et avec le deuxième dispositif 112 d'augmentation de pas, le profil du flanc 126 aval qui a été retenu est celui parmi les profils conjugués qui présente le minimum de matière.

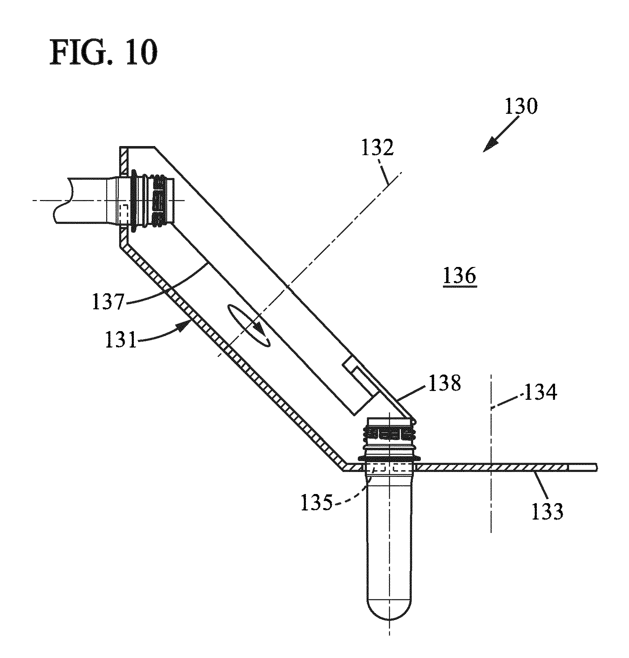

Comme illustré en figure 10, un dispositif 130 d'augmentation de pas peut être réalisé avec une première roue **131** mobile autour d'un premier axe **132** et une deuxième roue **133** mobile autour d'un deuxième axe **134.** La première roue 131 présente des encoches **135** conçues pour être dans le même plan que la deuxième roue 133 lorsque cette encoche arrive en regard de la roue 133. Cependant, les premier et deuxième axes 132, 134 sont sécants et sont contenus dans un plan 136 médian. Le dispositif 130 comprend un guide **137** de guidage, en forme de cône entourant la première roue 131, et un prolongateur **138** prolongeant le guidage des préformes jusqu'au plan médian 136 à un endroit où le guide 137 conique interfèrerai avec la deuxième roue 133.

Dans une variante, les premier et deuxième axes 132, 134 pourraient être non coplanaires strictement. Le plan médian du dispositif d'augmentation de pas serait alors celui par rapport auquel les premier et deuxième axes présenteraient globalement le minimum d'angle.

## Revendications

1. Dispositif (50, 111, 112, 130) d'augmentation de pas pour transfert positif et individuel d'objets (72), comprend :
- une première (51, A, B, 131) et une deuxième (56, B, C, 133) roues à encoches, mobiles respectivement autour d'un premier (53, 132) et d'un deuxième (57, 134) axes de rotation, lesquels axes sont sensiblement contenus dans un plan (58, 136) médian ; les encoches de chaque roue étant réparties respectivement selon un premier pas (67, 106, 114) périphérique et un deuxième pas (70, 114, 116) périphérique,
- un mécanisme de liaison desdites rotations synchronisant périodiquement les encoches des deux roues,
- un moyen d'entraînement en rotation des roues, définissant un côté amont et un côté aval du plan (58, 136) médian,
le deuxième pas périphérique est strictement supérieur au premier pas périphérique,
**caractérisé en ce que** le dispositif comporte un premier (55, 109, 113, 138) et un deuxième (60, 113, 115) guides entourant respectivement la première et la deuxième roue et s'étendant à partir du plan (58, 136) médian en direction respectivement du côté amont et du côté aval, et disposés pour maintenir l'objet dans l'encoche correspondante ; chacune des encoches étant délimitée par un flanc (61a, 61b, 61c, 61d ; 63a, 63b, 63c) amont coopérant avec le guide correspondant pour circonscrire un cercle de référence et par un flanc (62a, 62b, 62c, 62d; 64a, 64b, 64c) aval et **en ce que** pour chaque roue (51, 56), le flanc (62a, 62b, 62c, 62d ; 64a, 64b, 64c) aval des encoches est conçu pour ne pas interférer lors de la rotation des roues avec le cercle de référence de l'encoche correspondante de la roue opposée.

2. Dispositif selon la revendication 1, dans lequel le flanc aval de chacune des encoches d'au moins une des roues (51, 56) est défini par l'enveloppe de l'ensemble des cercles de référence de l'encoche correspondante à ladite encoche dans la roue (56, 51) opposée, lors de la rotation des roues.

3. Dispositif selon la revendication 1 ou 2, dans lequel les cercles de références comprennent chacun un centre, les centres (65a, 65b, 65c, 65d, 68a, 68b, 68d) des cercles de référence de chacune des encoches d'une roue (51, 56, A, B, C, 131, 133) sont répartis le long d'un cercle coaxial à l'axe de rotation de ladite roue.

4. Dispositif selon l'une des revendications précédentes, dans lequel le mécanisme de liaison est conçu pour solidariser la rotation de la première roue (51, A, B, 131) à encoches et la rotation de la deuxième roue (56, B, C, 133) à encoches de manière que périodiquement le centre (65a, 65b, 65c, 65d) du cercle de référence d'une encoche de la première roue arrive au plan médian (58, 136) simultanément à l'arrivée du centre (68a, 68b, 68c) du cercle de référence d'une encoche de la deuxième roue.

5. **Mécanisme** (102) de transfert constitué d'un premier dispositif (111) d'augmentation de pas, suivi d'un deuxième dispositif (112) d'augmentation de pas, chacun selon l'une des revendications précédentes, la deuxième roue (B) du premier dispositif (111) étant la première roue (B) du deuxième dispositif (112).

6. Mécanisme (102) selon la revendication 5, dans lequel chacun des dispositifs (111, 112) d'augmentation de pas présente un taux d'augmentation égal au deuxième pas (114, 116) périphérique divisé par le premier pas (106, 114) périphérique ; le flanc aval de chacune des encoches de la roue (B) commune au premier et au deuxième dispositifs (111, 112) étant défini par l'enveloppe de l'ensemble des cercles de référence de l'encoche correspondante à ladite encoche dans la roue opposée appartenant au dispositif (112) de plus grand taux d'augmentation, lors de la rotation des roues (A, B, C).

7. **Installation** (100) de soufflage de préformes (72), comprenant :
- un four (101) de chauffage des préformes comprenant un mécanisme de convoyage des préformes, présentant un pas (106) périphérique primaire de défilement des préformes (72),
- une machine (104) de soufflage comprenant une pluralité de stations (124) de soufflage des préformes (72), présentant un pas (123) périphérique final de défilement des stations de soufflage,
- un mécanisme (103) de transfert principal, conçu pour recevoir des préformes (72) selon un pas (116) périphérique intermédiaire strictement inférieur au pas (123) périphérique final et strictement supérieur au pas (106) périphérique primaire, et à mettre les préformes (72) à disposition de la machine (104) de soufflage,
- un mécanisme (102) de transfert auxiliaire, conçu pour recevoir des préformes (72) du four (101) de chauffage selon le pas (106) périphérique primaire et à mettre à disposition du mécanisme (103) de transfert principal, les préformes (72) selon le pas (116) périphérique intermédiaire,
dans laquelle, le mécanisme de transfert auxiliaire comprend un dispositif (50, 111, 112, 130) d'augmentation de pas selon l'une des revendications 1 à 4 ou consiste en un mécanisme (102) de transfert selon la revendication 5 ou 6.

## Patentansprüche

1. Vorrichtung (50, 111, 112, 130) zum Vergrößern der Teilung für eine positive und individuelle Übertragung von Objekten (72), umfassend:
- ein erstes (51, A, B, 131) und ein zweites (56, B, C, 133) Sternrad, die jeweils um eine erste (53, 132) und eine zweite (57, 134) Drehachse herum beweglich sind, wobei diese Achsen im Wesentlichen in einer Mittelebene (58, 136) enthalten sind; wobei die Einkerbungen jedes Rads jeweils gemäß einer ersten Umfangsteilung (67, 106, 114) und einer zweiten Umfangsteilung (70, 114, 116) verteilt sind,
- einen Mechanismus zum Verbinden der Drehungen, der die Einkerbungen der beiden Räder periodisch synchronisiert,
- ein Mittel zum drehmäßigen Antreiben der Räder, das eine vorgeschaltete Seite und eine nachgeschaltete Seite der Mittelebene (58, 136) definiert,
**dadurch gekennzeichnet, dass** die zweite Umfangsteilung zwingend größer als die erste Umfangsteilung ist, die Vorrichtung eine erste (55, 109, 113, 138) und eine zweite (60, 113, 115) Führung umfasst, die jeweils das erste und das zweite Rad umgeben und sich von der Mittelebene (58, 136) aus jeweils in Richtung auf die vorgeschaltete Seite und die nachgeschaltete Seite erstrecken und angeordnet sind, um das Objekt in der entsprechenden Einkerbung zu halten; wobei jede der Einkerbungen durch eine vorgeschaltete Flanke (61a, 61b, 61c, 61d; 63a, 63b, 63c), die mit der entsprechenden Führung zusammenwirkt, um einen Mittenkreis zu umschreiben, und durch eine nachgeschaltete Flanke (62a, 62b, 62c, 62d; 64a, 64b, 64c) begrenzt ist, und dass für jedes Rad (51, 56) die nachgeschaltete Flanke (62a, 62b, 62c, 62d; 64a, 64b, 64c) der Einkerbungen ausgebildet ist, um bei der Drehung der Räder nicht in den Mittenkreis der entsprechenden Einkerbung des gegenüberliegenden Rads einzugreifen.

2. Vorrichtung nach Anspruch 1, wobei die nachgeschaltete Flanke jeder der Einkerbungen mindestens eines der Räder (51, 56) durch die Hülle aller Mittenkreise der Einkerbung, die der Einkerbung in dem gegenüberliegenden Rad (56, 51) entspricht, bei der Drehung der Räder definiert ist.

3. Vorrichtung nach Anspruch 1 oder 2, wobei die Mittenkreise jeweils eine Mitte umfassen, wobei die Mitten (65a, 65b, 65c, 65d, 68a, 68b, 68d) der Mittenkreise jeder der Einkerbungen eines Rads (51, 56, A, B, C, 131, 133) entlang eines Kreises verteilt sind, der zur Drehachse des Rads koaxial ist.

4. Vorrichtung nach einem der vorhergehenden Ansprüche, wobei der Verbindungsmechanismus ausgelegt ist, um die Drehung des ersten Sternrads (51, A, B, 131) und die Drehung des zweiten Sternrads (56, B, C, 133) derart fest zu verbinden, dass die Mitte (65a, 65b, 65c, 65d) des Mittenkreises einer Einkerbung des ersten Rads periodisch an der Mittelebene (58, 136) gleichzeitig mit der Ankunft der Mitte (68a, 68b, 68c) des Mittenkreises einer Einkerbung des zweiten Rads ankommt.

5. Übertragungs**mechanismus** (102), der aus einer ersten Teilungsvergrößerungsvorrichtung (111) gefolgt von einer zweiten Teilungsvergrößerungsvorrichtung (112) jeweils nach einem der vorhergehenden Ansprüche besteht, wobei das zweite Rad (B) der ersten Vorrichtung (111) das erste Rad (B) der zweiten Vorrichtung (112) ist.

6. Mechanismus (102) nach Anspruch 5, wobei jede der Teilungsvergrößerungsvorrichtungen (111, 112) eine Vergrößerungsrate gleich der zweiten Umfangsteilung (114, 116) geteilt durch die erste Umfangsteilung (106, 114) aufweist; wobei die nachgeschaltete Flanke jeder der Einkerbungen des Rads (B), das den ersten und zweiten Vorrichtungen (111, 112) gemeinsam ist, durch die Hülle aller Mittenkreise der Einkerbung, die der Einkerbung in dem gegenüberliegenden Rad, das zu der Vorrichtung (112) mit der größeren Vergrößerungsrate gehört, entspricht, bei der Drehung der Räder (A, B, C) definiert ist.

7. **Anlage** (100) zum Blasformen von Vorformlingen (72), umfassend:
- einen Ofen (101) zum Erhitzen der Vorformlinge, der einen Mechanismus zum Befördern der Vorformlinge umfasst, der eine primäre Umfangsteilung (106) zum Vorbeilaufen der Vorformlinge (72) aufweist,
- eine Blasformmaschine (104), die eine Vielzahl von Stationen (124) zum Blasformen der Vorformlinge (72) umfasst und eine endgültige Umfangsteilung (123) zum Vorbeilaufen der Blasstationen aufweist,
- einen Hauptübertragungsmechanismus (103), der ausgelegt ist, um Vorformlinge (72) gemäß einer Zwischenumfangsteilung (116) aufzunehmen, die zwingend kleiner als die endgültige Umfangsteilung (123) und zwingend größer als die primäre Umfangsteilung (106) ist, und um die Vorformlinge (72) der Blasformmaschine (104) bereitzustellen,
- einen Hilfsübertragungsmechanismus (102), der ausgelegt ist, um Vorformlinge (72) von dem Heizofen (101) gemäß der primären Umfangsteilung (106) aufzunehmen und um dem Hauptübertragungsmechanismus (103) die Vorformlinge (72) gemäß der Zwischenumfangsteilung (116) zur Verfügung zu stellen,
wobei der Hilfsübertragungsmechanismus eine Teilungsvergrößerungsvorrichtung (50, 111, 112, 130) nach einem der Ansprüche 1 bis 4 umfasst oder aus einem Übertragungsmechanismus (102) nach Anspruch 5 oder 6 besteht.

## Claims

1. Pitch-increasing device (50, 111, 112, 130) for the positive and individual transfer of objects (72), comprising:
- a first star wheel (51, A, B, 131) and a second star wheel (56, B, C, 133), respectively rotatable about a first axis (53, 132) of rotation and a second axis (57, 134) of rotation, said first and second axes of rotation being substantially contained in a median plane (58, 136); the notches of each star wheel being respectively distributed according to a first peripheral pitch (67, 106, 114) and a second peripheral pitch (70, 114, 116),
- a mechanism for linking said rotations which periodically synchronizes the notches of the two star wheels,
- a means for rotating the star wheels, defining an upstream side and a downstream side of the median plane (58, 136),
The second peripheral pitch is strictly greater than the first peripheral pitch
**characterized in that** the device comprises a first guide (55, 109, 113, 138) and a second guide (60, 113, 115), respectively surrounding the first star wheel and the second star wheel and respectively extending from the median plane (58, 136) in the direction of the upstream side and the downstream side, and arranged to maintain the object in the corresponding notch; each of the notches being delimited by an upstream flanking edge (61a, 61b, 61c, 61d; 63a, 63b, 63c) cooperating with the corresponding guide to circumscribe a reference circle and by a downstream flanking edge (62a, 62b, 62c, 62d; 64a, 64b, 64c) **and in that** for each star wheel (51, 56), the downstream flanking edge (62a, 62b, 62c, 62d; 64a, 64b, 64c) of the notches is designed not to interfere with the reference circle of the corresponding notch of the opposite star wheel during the rotation of the star wheels.

2. Device according to claim 1, wherein the downstream flanking edge of each of the notches of at least one of the star wheels (51, 56) is defined by the envelope of the set of reference circles of the notch corresponding to said notch in the opposite star wheel (56, 51), during the rotation of the star wheels.

3. Device according to claim 1 or 2, wherein the reference circles each comprise a center, the centers (65a, 65b, 65c, 65d, 68a, 68b, 68d) of the reference circles of each of the notches of a star wheel (51, 56, A, B, C, 131, 133) being distributed along a circle coaxial to the axis of rotation of said star wheel.

4. Device according to any of the above claims, wherein the linking mechanism is designed to connect the rotation of the first star wheel (51, A, B, 131) and the rotation of the second star wheel (56, B, C, 133)such that the center (65a, 65b, 65c, 65d) of the reference circle of a notch of the first star wheel periodically reaches the median plane (58, 136) simultaneously with the arrival of the center (68a, 68b, 68c) of the reference circle of a notch of the second star wheel.

5. **Transfer mechanism** (102) consisting of a first pitch-increasing device (111) followed by a second pitch-increasing device (112), each according to one of the above claims, the second star wheel (B) of the first device (111) being the first star wheel (B) of the second device (112).

6. Mechanism (102) according to claim 5, wherein each of the pitch-increasing devices (111, 112) provides a level of increase that is equal to the second peripheral pitch (114, 116) divided by the first peripheral pitch (106, 114); the downstream flanking edge of each of the notches of the wheel (B) common to the first and second devices (111, 112) being defined by the envelope of the set of reference circles of the notch corresponding to said notch in the opposite star wheel that is part of the device (112) with the highest level of increase, during the rotation of the star wheels (A, B, C).

7. **Installation** (100) for blowing preforms (72), comprising:
- an oven (101) for heating preforms, comprising a mechanism for conveying preforms, having a primary peripheral preform (72) advancement pitch (106),
- a blowing machine (104) comprising a plurality of preform (72) blowing stations (124), having a final peripheral blowing station advancement pitch (123),
- a main transfer mechanism (103) designed for receiving preforms (72) according to an intermediate peripheral pitch (116) that is strictly less than the final peripheral pitch (123) and strictly greater than the primary peripheral pitch (106), and for providing the preforms (72) to the blowing machine (104),
- an auxiliary transfer mechanism (102), designed for receiving the preforms (72) from the oven (101) according to the primary peripheral pitch (106) and for providing the preforms (72) to the main transfer mechanism (103) according to the intermediate peripheral pitch (116),
wherein the auxiliary transfer mechanism comprises a pitch-increasing device (50, 111, 112, 130) according to one of claims 1 to 4 or consists in a transfer mechanism (102) according to claim 5 or 6.
